# EUROPEAN PATENT SPECIFICATION

(11) **EP 2 112 365 B1**
(45) Date of publication and mention of the grant of the patent: **07.03.2012**
(21) Application number: 08703115.9
(22) Date of filing: 11.01.2008
(51) Int. Cl.: F02M 25/08, F02D 41/00, B60W 10/06

(54) **EVAPORATED FUEL TREATING APPARATUS AND METHOD OF TREATING EVAPORATED FUEL**
VORRICHTUNG ZUR BEARBEITUNG VON VERDAMPFTEM BRENNSTOFF UND VERFAHREN ZUR BEARBEITUNG VON VERDAMPFTEM BRENNSTOFF
APPAREIL DE TRAITEMENT DE CARBURANT ÉVAPORÉ ET PROCÉDÉ DE TRAITEMENT DE CARBURANT ÉVAPORÉ

(30) Priority: 14.02.2007 JP 2007033055
(43) Date of publication of application: 28.10.2009
(73) Proprietor: Toyota Jidosha Kabushiki Kaisha, Toyota-shi, Aichi 471-8571 (JP)
(72) Inventor: KOBAYASHI, Masahide, Toyota-shi Aichi 471-8571 (JP)
(74) Representative: Kuhnen & Wacker
(86) International application number: PCT/JP2008/050251
(87) International publication number: WO 2008/099628

(56) References cited:
- DE-A1- 4 316 728
- JP-A- 05 340 315
- JP-A- 2006 037 783
- JP-A- 2007 016 622

## Description

### Technical Field

The present invention relates to an evaporated fuel treating apparatus and a method of treating evaporated fuel.

### Background Technology

As an evaporated fuel treating apparatus for treating evaporated fuel generated at a fuel tank or the like, Japanese Patent Application Laid-Open (JP-A) No. 7-253058 discloses a structure that, by using a suction pump for pressure reduction of a vacuum boosting device for the brake, guides the exhaust of this suction pump to a canister, and re-gasifies the fuel adsorbed at the canister. Due thereto, evaporated fuel, that is adsorbed at a canister, can be re-gasified by a simple structure.

By the way, in a structure that carries out gasification of adsorbed fuel within a canister by the exhaust of a suction pump in this way, there are cases in which time is required when feeding the evaporated fuel, that is re-gasified at the canister, to the engine. In actual evaporated fuel treating apparatuses and methods of treating evaporated fuel, it is desired to re-gasify adsorbed fuel within a canister and supply it to the engine in a shorter time period.

Document JP 2007 016622 A provides an evaporation gas treatment device capable of reduction of purge of evaporation gas into an engine when combustion does not occur in an engine combustion chamber, and of treatment of evaporation gas. This device is provided with a canister, a purge control valve, a tank provided between the purge control valve and the intake air passage, a check valve permitting only flow from the tank to the intake air passage, a tank pressure measurement means, and a control means controlling open and close of the purge control valve when signal of fuel cut or ignition cut is received. The control means shuts off flow of evaporation gas into the intake air passage from the canister and accumulates vacuum of the intake air passage in the tank by closing the purge control valve when the same judges that tank pressure exceeds intake pressure, and purges evaporation gas in the canister into the tank by using vacuum accumulated in the tank by opening the purge control valve when the same judges tank pressure is equal to or less than intake pressure.

Document JP 05-340315 A furthermore discloses a vapor fuel processor that aims to prevent deterioration of control performance of an air-fuel ratio by fully suppressing variation of the concentration of vapor which is purged. There, vapor is forcibly sucked from a canister by a purge pump, and then discharged to a purge control valve. A part of vapor discharged from the purge pump to the purge control valve is circulated in the suction side of the purge pump, and mixed with the vaport sucked by the canister.

### Disclosure of the Invention

### Problems to be Solved by the Invention

In view of the above-described circumstances, the topic of the present invention is to obtain an evaporated fuel treating apparatus and method of treating evaporated fuel that can re-gasify adsorbed fuel within a canister and supply it to an engine in a shorter time period. Means for Solving the Problems

The invention recited in claim 1 comprises: a canister that communicates with a fuel tank, and into which evaporated fuel that is generated within the fuel tank is introduced; a blocking valve provided at an atmosphere communicating tube that communicates the canister with the atmosphere, and able to shut-off communication of the canister with the atmosphere; a canister internal pressure sensor detecting an internal pressure of the canister; a pressure reducing device in form of a pump or compressor and able to reduce pressure of a canister interior; and storing means provided at a fuel supply tube that communicates the pressure reducing device and an engine, and able to temporarily store evaporated fuel.

In the invention recited in claim 2, in the invention recited in claim 1, the storing means is structured by: a storage container installed at the supply delivery piping; a first control valve installed at the fuel supply tube between the pressure reducing device and the storage container; and a second control valve installed at the fuel supply tube between the storage container and the engine.

The invention recited in claim 3 is a method of treating evaporated fuel that treats evaporated fuel by using the evaporated fuel treating apparatus recited in claim 1 or claim 2, the method comprising: a storing step of reducing pressure of the canister interior to a predetermined pressure by the pressure reducing device in a state in which the blocking valve is closed, and storing, in the storing means, evaporated fuel that is gasified; and a supplying step of supplying the evaporated fuel, that is stored in the storing means, through the supply delivery piping to the engine.

In the evaporated fuel treating apparatus of claim 1 or claim 2 of the present invention, evaporated fuel can be treated by, for example, the method of treating evaporated fuel recited in claim 3.

Namely, in the storing step, first, the blocking valve is closed, and communication of the canister with the atmosphere is obstructed. The pressure reducing device is driven in this state, and, while the canister internal pressure is detected by the canister internal pressure sensor, the pressure of the canister interior is reduced to the predetermined pressure. Due thereto, the evaporated fuel that is adsorbed by the adsorbent within the canister is re-gasified and is stored in the storing means.

Next, in the supplying step (e.g., at the time of engine driving), the evaporated fuel stored in the storing means is supplied to the engine through the fuel supply tube. Because gasified fuel is stored in advance in the storing means, gasified fuel can be supplied to the engine in a short time period.

In the invention recited in claim 4, in the invention recited in claim 3, in the storing step, the blocking valve is opened during reducing of pressure of the canister interior.

In this way, by opening the blocking valve during reducing of pressure of the canister interior and introducing the atmosphere into the canister, the evaporated fuel that is gasified can be controlled so as to be re-adsorbed by the adsorbent within the canister.

In the invention recited in claim 5, in the invention recited in claim 3 or claim 4, in the storing step, after the canister interior becomes the predetermined pressure due to pressure reduction by the pressure reducing device, pressure of the canister interior is further reduced by the pressure reducing device.

In this way, after the canister interior becomes the predetermined pressure, by further reducing the pressure of the canister interior by the pressure reducing device, the fuel component that remains and is adsorbed by the adsorbent within the canister can be desorbed.

The invention recited in claim 6 is the method of treating evaporated fuel recited in claim 3 that treats evaporated fuel by using the evaporated fuel treating apparatus recited in claim 2, wherein, in the storing step, the pressure reducing device is driven in a state in which the first control valve is opened and the second control valve is closed.

The invention recited in claim 7 is the method of treating evaporated fuel recited in claim 3 that treats evaporated fuel by using the evaporated fuel treating apparatus recited in claim 2, wherein, in the supplying step, the first control valve is closed, the second control valve is opened, and the evaporated fuel stored in the storage container is supplied to the engine.

Namely, in the case of the evaporated fuel treating apparatus recited in claim 2, treating of evaporated fuel can be carried out by the method of treating evaporated fuel recited in claim 6 or the method of treating evaporated fuel recited in claim 7.

In the method of treating evaporated fuel recited in claim 6, because the first control valve is opened and the second control valve is closed, the evaporated fuel within the canister can be fed to the storage container by driving of the pressure reducing device.

In the method of treating evaporated fuel recited in claim 7, because the first control valve is closed and the second control valve is opened, the evaporated fuel stored in the storage container can be fed to the engine through the fuel supply tube.

### Effects of the Invention

Because the present invention is structured as described above, it is possible to re-gasify adsorbed fuel within a canister and supply it to an engine in a shorter time period.

### Brief Description of the Drawings

Fig. 1 is a schematic structural drawing showing an evaporated fuel treating apparatus of an embodiment of the present invention.
Fig. 2 is a block diagram of the evaporated fuel treating apparatus of the embodiment of the present invention.

### Preferred Forms for Embodying the Invention

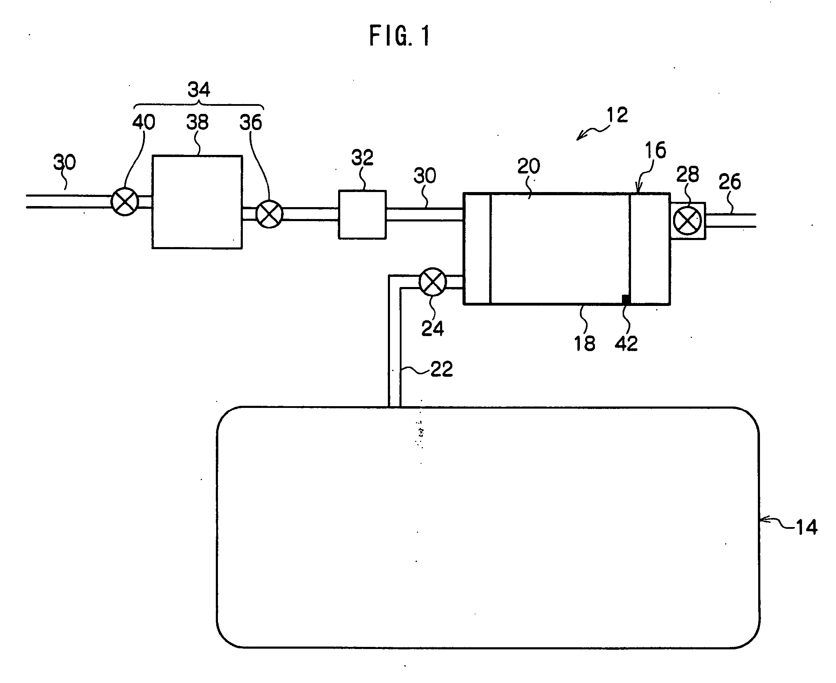

An evaporated fuel treating apparatus 12 of an embodiment of the present invention is shown in Fig. 1. This evaporated fuel treating apparatus 12 is used in order to treat, in a canister 16, evaporated fuel that is generated at a fuel tank 14 or the like that is installed in an automobile. An adsorbent 20 that is structured so as to include activated carbon is accommodated within a canister container 18 that structures the canister 16, and evaporated fuel can be adsorbed and desorbed by this absorbent 20.

Note that, in the present embodiment, the object of application is a so-called hybrid car that, in addition to an engine, is equipped with a motor for driving (both of which are not illustrated) that receives supply of electric power from a battery for traveling as the driving sources for vehicle traveling.

The fuel tank 14 and the canister 16 are connected by a vapor piping 22. An open/close valve 24 is provided at the vapor piping 22, and the movement of evaporated fuel from the fuel tank 14 to the canister 16 can be controlled.

An atmosphere communicating tube 26, that communicates with the exterior (the atmosphere) is provided at the canister 16, and a blocking valve 28 is provided at the atmosphere communicating tube 26. The internal pressure of the canister 16 (canister internal pressure) can be maintained at a desired pressure by opening/closing, or adjusting the degree of opening, of the open/close valve 24 and the blocking valve 28, respectively. Therefore, the canister container 18 is structured to have pressure-resistance such that it can withstand the canister internal pressure that is supposed.

Further, a supply delivery piping 30 is provided between the canister 16 and an unillustrated engine air intake tube. A compressor 32, a first control valve 36, a storage container 38 and a second control valve 40 are provided at the supply delivery piping 30 in that order from the canister 16 side. A storing means 34 of the present invention is structured by the first control valve 36, the storage container 38 and the second control valve 40.

By driving, the compressor 32 sucks the vapor within the canister 16, and can feed it to the storage means 34 (the storage container 38). In particular, by driving the compressor 32 in the state in which the blocking valve 28 is closed, the pressure within the canister 16 is reduced. Further, by driving the compressor 32 in the state in which the first control valve 36 is open and the second control valve 40 is closed, the vapor that is sucked from the canister 16 can be stored in the storage container 38. Note that internal pressure acts on the storage container 38 due to the stored vapor, but the storage container 38 has pressure-resistance such that it can withstand the maximum internal pressure that is supposed.

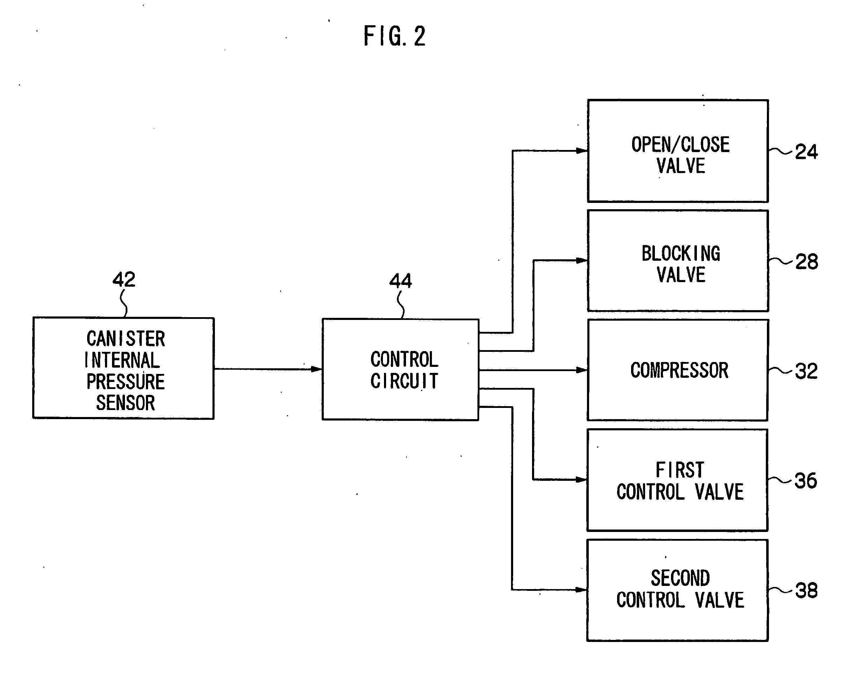

Within the canister 16 is provided a canister internal pressure sensor 42 that detects the internal pressure thereof. As shown in Fig. 2, the canister internal pressure sensor 42 sends the detected internal pressure data to a control circuit 44. Further, the opening/closing and the adjustment of the degree of opening of the open/close valve 24, the blocking valve 28, the first control valve 36 and the second control valve 40 are carried out by the control circuit 44 by, for example, duty control. Similarly, the compressor 32 as well is driven-controlled by the control circuit 44.

Next, the operation and effects of the evaporated fuel treating apparatus 12 of the present embodiment will be described.

In the evaporated fuel treating apparatus 12 of the present embodiment, in the same way as a general evaporated fuel treating apparatus, by opening the open/close valve 24, the evaporated fuel generated within the fuel tank 14 is fed into the canister 16 and can be adsorbed by the adsorbent 20.

Here, in the evaporated fuel treating apparatus 12 of the present embodiment in particular, in the state in which evaporated fuel is adsorbed by the adsorbent 20 within the canister 16, the blocking valve 28 is closed and the compressor 32 is driven. At this time, the first control valve 36 is opened, and the second control valve 40 is closed. Due thereto, vapor within the canister 16 is fed to the storage container 38, and the canister internal pressure decreases. Further, the compressor 32 is driven-controlled until the canister internal pressure becomes a set value that is set in advance (e.g., around 50 kPa as absolute pressure) by the canister internal pressure sensor 42.

Generally, the fuel component that is adsorbed by the adsorbent 20 within the canister 16 has vapor pressure of vapor pressure (approximately 50 kPa as absolute pressure) that is less than or equal to the vapor pressure of gasoline at around 40°C. Accordingly, by making the canister internal pressure be around 50 kPa as described above, the fuel component that is adsorbed by the adsorbent 20 can be brought to a boiling state or a state that is near thereto, and gasification, i.e., desorption, can be promoted.

Here, if the change in the canister internal pressure detected by the canister internal pressure sensor 42 is stable, it can be judged that the gasification of the fuel component adsorbed by the adsorbent 20 is finished, and therefore, driving of the compressor 32 is stopped. Note that, in the state in which the change in the canister internal pressure is stable in this way, the compressor 32 may be driven further and the canister internal pressure may be lowered. Due thereto, of the liquefied fuel that remains within the canister 16, in particular, the low-boiling point component thereof can be gasified and desorbed. The fuel component that is gasified here is also fed to the storage container 38.

In this way, if the blocking valve 28 is opened while the canister internal pressure is maintained substantially constant, air flows-in into the canister 16 from the atmosphere communicating tube 26. Therefore, the evaporated fuel that gasified within the canister 16 is further fed to the storage container 38 by the flow of this air. Namely, by opening the blocking valve 28, the evaporated fuel that gasified within the canister 16 can be purged while being prevented from being adsorbed again by the adsorbent 20.

Due to the above-described process, by moving vapor (evaporated fuel) from the canister 16 to the storage container 38 and temporarily storing it, evaporated fuel of a uniform concentration can be accommodated within the storage container 38. Further, the pressure within the storage container 38 becomes high.

Here, for example, at the time of engine driving or the like, if the first control valve 36 is closed and further the second control valve 40 is opened, the evaporated fuel within the storage container 38 is fed to the engine through the supply delivery piping 30 and the engine supply tube by the internal pressure of the storage container 38. Namely, even in cases in which the negative pressure generated at the engine is small, the evaporated fuel can be forcibly fed to the engine by the internal pressure of the storage container 38. In particular, in a hybrid car or the like that is the object of application of the present embodiment, the operating time of the engine is often short, but, even in these cases, evaporated fuel can be reliably fed to the engine:

Further, because the concentration of the evaporated fuel within the storage container 38 is made to be uniform, fluctuations in the so-called A/F (the ratio of air to fuel) at the time of supplying evaporated fuel to the engine are small as compared with a structure in which evaporated fuel is not stored temporarily in such a storage container 38. Due thereto, driving of the engine at the time of purging can be stabilized, and control of emissions can be carried out easily.

Note that, in the above description, the compressor is given as an example of the pressure reducing device of the present invention, but it suffices to be able to reduce the pressure within the canister, and, for example, a pump may be used.

### Description of the Reference Numerals

- 12: evaporated fuel treating apparatus
- 14: fuel tank
- 16: canister
- 18: canister container
- 20: adsorbent
- 22: vapor piping
- 24: open/close valve
- 26: atmosphere communicating tube
- 28: blocking valve
- 30: fuel delivery piping
- 32: compressor (pressure reducing device)
- 34: storing means
- 36: first control valve
- 38: storage container
- 40: second control valve
- 42: canister internal pressure sensor
- 44: control circuit

## Claims

1. An evaporated fuel treating apparatus (12) comprising:
a canister (16) that communicates with a fuel tank (14), and into which evaporated fuel that is generated within the fuel tank (14) is introduced;
a blocking valve (28) provided at an atmosphere communicating tube (26) that communicates the canister (16) with the atmosphere, and able to shut-off communication of the canister (16) with the atmosphere;
a canister internal pressure sensor (42) detecting an internal pressure of the canister (16);
a pressure reducing device (32) in form of a pump or compressor and able to reduce pressure of a canister interior; and
storing means (34) provided at a supply delivery piping (30) that communicates the pressure reducing device (32) and an engine, and able to temporarily store evaporated fuel.

2. The evaporated fuel treating apparatus (12) of claim 1, wherein the storing means (34) is structured by:
a storage container (38) installed at the supply delivery piping (30);
a first control valve (36) installed at the supply delivery piping (30) between the pressure reducing device (32) and the storage container (38); and
a second control valve (40) installed at the supply delivery piping (30) between the storage container (38) and the engine.

3. A method of treating evaporated fuel that treats evaporated fuel by using the evaporated fuel treating apparatus (12) of claim 1 or claim 2, the method comprising:
a storing step of reducing pressure of the canister interior to a predetermined pressure by the pressure reducing device (32) in a state in which the blocking valve (28) is closed, and storing, in the storing means (34), evaporated fuel that is gasified; and
a supplying step of supplying the evaporated fuel, that is stored in the storing means (34), through the supply delivery piping (30) to the engine.

4. The method of treating evaporated fuel of claim 3, wherein, in the storing step, the blocking valve (28) is opened during reducing of pressure of the canister interior.

5. The method of treating evaporated fuel of claim 3 or claim 4, wherein, in the storing step, after the canister interior becomes the predetermined pressure due to pressure reduction by the pressure reducing device (32), pressure of the canister interior is further reduced by the pressure reducing device (32).

6. The method of treating evaporated fuel of claim 3 that treats evaporated fuel by using the evaporated fuel treating apparatus (12) of claim 2, wherein,
in the storing step, the pressure reducing device (32) is driven in a state in which the first control valve (36) is opened and the second control valve (40) is closed.

7. The method of treating evaporated fuel of claim 3 that treats evaporated fuel by using the evaporated fuel treating apparatus (12) of claim 2, wherein,
in the supplying step, the first control valve (36) is closed, the second control valve (40) is opened, and the evaporated fuel stored in the storage container (38) is supplied to the engine.

## Patentansprüche

1. Kraftstoffdampf-Behandlungsvorrichtung (12), aufweisend:
einen Behälter (16), der mit einem Kraftstofftank (14) verbunden ist, und in den ein Kraftstoffdampf, der innerhalb des Kraftstofftanks (14) erzeugt wird, eingebracht wird;
ein Sperrventil (28), das an einem mit einer Atmosphäre verbundenen Rohr (26) angeordnet ist, das den Behälter (16) mit der Atmosphäre verbindet, und das eine Verbindung des Behälters (16) mit der Atmosphäre unterbrechen kann;
einen Behälterinnendruck-Sensor (42), der einen Innendruck des Behälters (16) erfasst;
eine Druckreduktionsvorrichtung (32) in Form einer Pumpe oder eines Kompressors, die einen Druck eines Behälterinneren reduzieren kann; und
eine Speichereinrichtung (34), die an einer Speisungszuführleitung (30) angeordnet ist, die die Druckreduktionsvorrichtung (32) mit einem Motor verbindet, und die den Kraftstoffdampf vorübergehend speichern kann.

2. Kraftstoffdampf-Behandlungsvorrichtung (12) nach Anspruch 1, wobei die Speichereinrichtung (34) aufgebaut ist aus:
einem Speicherbehälter (38), der an der Speisungszuführleitung (30) installiert ist;
einem ersten Steuerventil (36), der an der Speisungszuführleitung (30) zwischen der Druckreduktionsvorrichtung (32) und dem Speicherbehälter (38) installiert ist; und
einem zweiten Steuerventil (40), das an der Speisungszuführleitung (30) zwischen dem Speicherbehälter (38) und dem Motor installiert ist.

3. Verfahren zum Behandeln von Kraftstoffdampf, das einen Kraftstoffdampf durch Verwendung der Kraftstoffdampf-Behandlungsvorrichtung (12) nach Anspruch 1 oder 2 behandelt, wobei das Verfahren beinhaltet:
einen Speicherschritt zum Reduzieren eines Drucks des Behälterinneren auf einen vorbestimmten Druck durch die Druckreduktionsvorrichtung (32) in einem Zustand, in dem das Sperrventil (28) geschlossen ist, und zum Speichern, in der Speichereinrichtung (34), des in einen gasförmigen Zustand verwandelten Kraftstoffdampfs; und
einen Speisungsschritt zum Speisen des Kraftstoffdampfs, der in der Speichereinrichtung (34) gespeichert ist, durch die Speisungszuführleitung (30) in den Motor.

4. Verfahren zum Behandeln eines Kraftstoffdampfs nach Anspruch 3, wobei, in dem Speicherschritt, das Sperrventil (28) während des Reduzierens des Drucks des Behälterinneren geöffnet wird.

5. Verfahren zum Behandeln eines Kraftstoffdampfs nach Anspruch 3 oder 4, wobei, in dem Speicherschritt, nachdem das Behälterinnere aufgrund der Druckreduktion durch die Druckreduktionsvorrichtung (32) dem vorbestimmten Druck entspricht, der Druck des Behälterinneren durch die Druckreduktionsvorrichtung (32) weiter reduziert wird.

6. Verfahren zum Behandeln eines Kraftstoffdampfs nach Anspruch 3, das einen Kraftstoffdampf durch Verwendung der Kraftstoffdampf Behandlungsvorrichtung (12) nach Anspruch 2 behandelt, wobei,
in dem Speicherschritt, die Druckreduktionsvorrichtung (32) in einem Zustand angetrieben wird, in dem das erste Steuerventil (36) geöffnet und das zweite Steuerventil (40) geschlossen wird.

7. Verfahren zum Behandeln von Kraftstoffdampf nach Anspruch 3, das einen Kraftstoffdampf durch Verwendung der Kraftstoffdampf-Behandlungsvorrichtung (12) nach Anspruch 2 behandelt, wobei,
in dem Speisungsschritt, das erste Steuerventil (36) geschlossen wird, das zweite Steuerventil (40) geöffnet wird und der in dem Speicherbehälter (38) gespeicherte Kraftstoffdampf in den Motor gespeist wird.

## Revendications

1. Dispositif de traitement de combustible évaporé (12) comprenant :
un bidon (16) qui communique avec un réservoir de combustible (14), et dans lequel du combustible évaporé qui est généré dans le réservoir de combustible (14) est introduit ;
une soupape de blocage (28) placée au niveau d'un tube de communication avec l'atmosphère (26) qui fait communiquer le bidon (16) avec l'atmosphère, et pouvant couper la communication du bidon (16) avec l'atmosphère ;
un capteur de pression intérieure de bidon (42) détectant une pression intérieure du bidon (16) ;
un dispositif de réduction de pression (32) sous forme d'une pompe ou d'un compresseur et pouvant réduire la pression d'un intérieur de bidon ; et
des moyens de stockage (34) placés dans une tuyauterie d'alimentation (30) qui fait communiquer le dispositif de réduction de pression (32) et un moteur, et pouvant temporairement stocker du combustible évaporé.

2. Dispositif de traitement de combustible évaporé (12) selon la revendication 1, dans lequel les moyens de stockage sont structurés par :
un récipient de stockage (38) installé au niveau de la tuyauterie d'alimentation (30) ;
une première soupape de commande (36) installée au niveau de la tuyauterie d'alimentation (30) entre le dispositif de réduction de pression (32) et le récipient de stockage (38) ; et
une seconde soupape de commande (40) installée au niveau de la tuyauterie d'alimentation (30) entre le récipient de stockage (38) et le moteur.

3. Procédé de traitement de combustible évaporé qui traite du combustible évaporé en utilisant le dispositif de traitement de combustible évaporé (12) de la revendication 1 ou la revendication 2, le procédé comprenant :
une étape de stockage consistant à réduire la pression à l'intérieur du bidon à une pression prédéterminée par le dispositif de réduction de pression (32) dans un état dans lequel la soupape de blocage (28) est fermée, et à stocker, dans les moyens de stockage (34), du combustible évaporé qui est gazéifié ; et
une étape d'alimentation consistant à alimenter le combustible évaporé, qui est stocké dans les moyens de stockage (34), par l'intermédiaire de la tuyauterie d'alimentation (30) vers le moteur.

4. Procédé de traitement de combustible évaporé selon la revendication 3, dans lequel, lors de l'étape de stockage, la soupape de blocage (28) est ouverte pendant la réduction de la pression à l'intérieur du bidon.

5. Procédé de traitement de combustible évaporé selon la revendication 3 ou la revendication 4, dans lequel, lors de l'étape de stockage, après que l'intérieur du bidon a atteint la pression prédéterminée du fait de la réduction de pression par le dispositif de réduction de pression (32), le pression à l'intérieur du bidon est encore réduite par le dispositif de réduction de pression (32).

6. Procédé de traitement de combustible évaporé selon la revendication 3 qui traite du combustible évaporé en utilisant le dispositif de traitement de combustible évaporé (12) selon la revendication 2, dans lequel,
lors de l'étape de stockage, le dispositif de réduction de pression (32) est entraîné dans un état dans lequel la première soupape de commande (36) est ouverte et la seconde soupape de commande (40) est fermée.

7. Procédé de traitement de combustible évaporé selon la revendication 3 qui traite du combustible évaporé en utilisant le dispositif de traitement de combustible évaporé (12) selon la revendication 2, dans lequel,
lors de l'étape d'alimentation, la première soupape de commande (36) est fermée, la seconde soupape de commande (40) est ouverte, et le combustible évaporé stocké dans le récipient de stockage (38) est alimenté vers le moteur.
